# EUROPÄISCHE PATENTSCHRIFT

(11) **EP 1 516 146 B1**
(45) Veröffentlichungstag und Bekanntmachung des Hinweises auf die Patenterteilung: **20.08.2008**
(21) Anmeldenummer: 03760559.9
(22) Anmeldetag: 12.06.2003
(51) Int. Cl.: F22B 1/18

(54) **ABHITZEDAMPFERZEUGER**
WASTE HEAT STEAM GENERATOR
GENERATEUR DE VAPEUR A RECUPERATION DE CHALEUR

(30) Priorität: 25.06.2002 DE 10228335
(43) Veröffentlichungstag der Anmeldung: 23.03.2005
(73) Patentinhaber: SIEMENS AKTIENGESELLSCHAFT, 80333 München (DE); Siemens Westinghouse Power Corporation, Orlando, FL 32826-2399 (US)
(72) Erfinder: SCHMID, Erich, 91080 Marloffstein (DE); BRÜCKNER, Jan, 91080 Uttenreuth (DE); WINDECKER, Eva, 91096 Möhrendorf (DE)
(74) Vertreter: Maier, Daniel Oliver
(86) Internationale Anmeldenummer: PCT/DE2003/001966
(87) Internationale Veröffentlichungsnummer: WO 2004/001288

(56) Entgegenhaltungen:
- EP-A- 0 889 204
- FR-A- 2 692 966
- GB-A- 1 553 867
- US-A- 3 204 407

## Beschreibung

Die Erfindung betrifft einen Abhitzedampferzeuger nach dem Oberbegriff des Anspruchs 1. Ein solcher Abhitzedampferzeuger ist aus Dokument US-A-3 204 407 schon bekannt.

Viele moderne Kraftwerksanlagen, welche zur Erzeugung von elektrischer Energie mit Gasturbinen ausgerüstet sind, umfassen darüber hinaus einen oder mehrere Abhitzekessel, um das heiße Abgas der Gasturbinen, welches nach dem Ausstoß aus der Gasturbine immer noch ein hohes Energiepotenzial besitzt, für eine weitere Umwandlung in nutzbare Energie zu verwenden. Dabei wird beispielsweise die Dampferzeugung des Abhitzekessels zum Betrieb mindestens einer Dampfturbine genutzt, so dass der Wirkungsgrad eines derartigen Gas- und Dampfkraftwerks (GUD-Kraftwerk) erhöht ist im Vergleich zu einem reinen Gasturbinenkraftwerk.

Neben der Dampfturbine wird in heutigen GUD-Kraftwerken für verschiedenste weitere Verbraucher (z. B. Nebenstrom-Entgaser, Gebäudeheizung etc.) Hilfsdampf benötigt. Dieser Hilfsdampf wird insbesondere im Anlagenstillstand und beim An-/Abfahren der Turbinensätze, aber auch und im Normalbetrieb, beispielsweise mit Nennlast, der Kraftwerksanlage benötigt.
Während eines Anlagenstillstands stößt die Gasturbine kein heißes Abgas aus, so dass mittels des Abhitzekessels in diesem Betriebsfall kein Betriebsdampf und auch kein Hilfsdampf für die Dampfturbine sowie weiterer, oben beispielhaft genannter weiterer Dampfverbraucher, bereit gestellt werden kann.

Um derartige Dampfverbraucher mit Hilfsdampf zu versorgen, wird in bekannten Kraftwerken meist ein vom Abhitzedampferzeuger vollkommen getrennter und unabhängiger, befeuerter Hilfsdampferzeuger eingesetzt.

In solchen Hilfsdampferzeugern wird im Anlagenstillstand und beim An-/Abfahren Sattdampf erzeugt, ggf. überhitzt, und den o.g. Dampfverbrauchern zugeführt.

Im Normalbetrieb der Anlage wird der benötigte Hilfsdampf beispielsweise in einem Niederdruckteil des Abhitzedampferzeugers erzeugt, wobei während des Normalbetriebs der vom Abhitzedampferzeuger getrennt aufgebaute Hilfsdampferzeuger nicht unbedingt benötigt wird, da der Hilfsdampf im Abhitzedampferzeuger selbst auf Grund des darin eingeleiteten heißen Abgases erzeugbar ist.

Ein Verzicht auf den Hilfsdampferzeuger bei einer bekannten Kraftwerksanlage ist oft nur in Ausnahmefällen (z.B. bei reinen Grundlastkraftwerken, welche praktisch rund um die Uhr arbeiten und daher permanent heißes Abgas zur Hilfsdampferzeugung zur Verfügung steht) möglich und führt zu erheblichen Einschränkungen der Flexibilität der Anlage, da beispielsweise ein völliger Anlagenstillstand oder ein Betrieb mit sehr kleiner Last zum Verlust der Hilfsdampferzeugung führt.

Weitere Anforderungen an Kraftwerksanlagen umfassen das Anwärmen und das Warm- und Druckhalten des Abhitzekessels und der Frischdampfleitungen sowie das Anwärmen und Warmhalten der Dampfturbine auf möglichst hohem Temperatur- bzw. Druckniveau; genannte Anforderungen sollen auch im Anlagenstillstand und beim An- oder Abfahren der Turbinen erfüllt sein.

Beispielsweise ist die Anfahrzeit einer bekannten Kraftwerksanlage abhängig vom Druck und der Temperatur des Hilfsdampfs.

Der Abhitzedampferzeuger eines Gas- und Dampfkraftwerks kann dabei einen Abhitzekessel umfassen, dem Abgas einer Gasturbine zuführbar ist und kann weiterhin mindestens einen, im Abhitzekessel angeordneten, Verdampfer zur Erzeugung von Betriebsdampf für eine Dampfturbine umfassen, wobei dem Abhitzekessel Rauchgas aus einer Befeuerungseinrichtung zuführbar ist und zumindest ein Teil des Rauchgases an mindestens einer Stelle des Abhitzekessels entnehmbar und der Eintrittsöffnung des Abhitzekessels rückführbar ist.

Bei einem derartigen Abhitzedampferzeuger wird folglich zumindest ein Teil des Rauchgases, welches den Abhitzekessel verlässt und/oder welches dem Abhitzekessel an mindestens einer Stelle vor dessen Austrittsöffnung entnommen wird, in einem Rauchgaskreislauf geführt.
Die Befeuerungseinrichtung umfasst beispielsweise einen Brenner, welchem Brennstoff und Verbrennungsluft, sowie als zu erhitzendes Medium der Teil des Rauchgases zugeführt wird. Das mittels der Befeuerungseinrichtung erhitzte Rauchgas wird dann (wieder) in den Abhitzekessel eingeleitet, wo es mittels Wärmetausch Energie an den Verdampfer abgibt, so dass letzterer zur Erzeugung von Hilfsdampf befähigt ist. Der Hilfsdampf kann dann beispielsweise aus einer Dampftrommel des Verdampfers entnommen und Verbrauchern von Hilfsdampf sowie Frischdampfleitungen und/oder der Dampfturbine zugeführt werden.

Das während seines Durchströmens durch den Abhitzekessel abkühlende Rauchgas wird nach Entnahme mindestens eines Teiles zurück zur Eintrittsöffnung des Abhitzekessels geführt, wobei es mittels der Befeuerungseinrichtung aufgeheizt wird.

Die Befeuerungseinrichtung kann dabei für Dampflasten ausgelegt sein, welche einer benötigten Hilfsdampflast und/oder einer benötigten Wärmemenge zur Erwärmung von Frischdampfleitungen und/oder der Dampfturbine entsprechen.

Bei einem derartigen Abhitzedampferzeuger ist insbesondere in Betriebsfällen, in welchen kein oder nur wenig heißes Abgas zur Verfügung steht (z.B. Stillstand, An-/Abfahren usw.), die Versorgung mit Hilfsdampf sicher gestellt. Darüber hinaus ist eine unnötig hohe Auslegung der Befeuerungsanlage vermieden, da mittels dieser nicht der Betriebsdampf der Dampfturbine erzeugbar sein muss.

Des Weiteren kann im Normalbetrieb der Kraftwerksanlage der benötigte Hilfsdampf alternativ oder in Ergänzung zur Befeuerungsanlage mittels des Abgases erzeugt sein.

Überschüssiges Rauchgas kann nach dem Verlassen des Abhitzekessels z.B. in einen Kamin eingeleitet werden.

Der Abhitzedampferzeuger kann mindestens zwei Verdampfer umfassen.

Derartig ausgerüstete Abhitzekessel mit auf unterschiedlichen Temperaturniveaus angeordneten Verdampfern sind bei einer Vielzahl von Kraftwerksanlagen bekannt.

Dabei kann der mindestens eine Teil des Rauchgases dem Abhitzekessel in Strömungsrichtung des Rauchgases vor mindestens einem der Verdampfer entnehmbar sein.

An einer derartigen Entnahmestelle ist der Energieinhalt des Rauchgases noch nicht stark erniedrigt.

Alternativ kann der mindestens eine Teil des Rauchgases dem Abhitzekessel an oder in Strömungsrichtung des Rauchgases nach dessen Austrittsöffnung entnehmbar sein.

Hierbei hat das Rauchgas den Abhitzekessel komplett durchlaufen, bevor der zumindest eine Teil der Befeuerungseinrichtung rückgeführt wird.

Somit ist sicher gestellt, dass praktisch die gesamte, in den Abhitzekessel eingeleitete, Menge an Rauchgas einen Wärmetausch mit dem Verdampfer, dem der Hilfsdampf entnommen wird, vornehmen kann. Dampferzeuger ähnlicher Art sind beispielsweise aus der US 3,204,407 und der GB 1 553 867 bekannt.

Der Erfindung liegt nunmehr die Aufgabe zu Grunde, einen Abhitzedampferzeuger anzugeben, welcher einen flexiblen Betrieb der Kraftwerksanlage ermöglicht.

Diese Aufgabe wird erfindungsgemäß gelöst durch die kennzeichnenden Merkmale des Anspruchs 1.

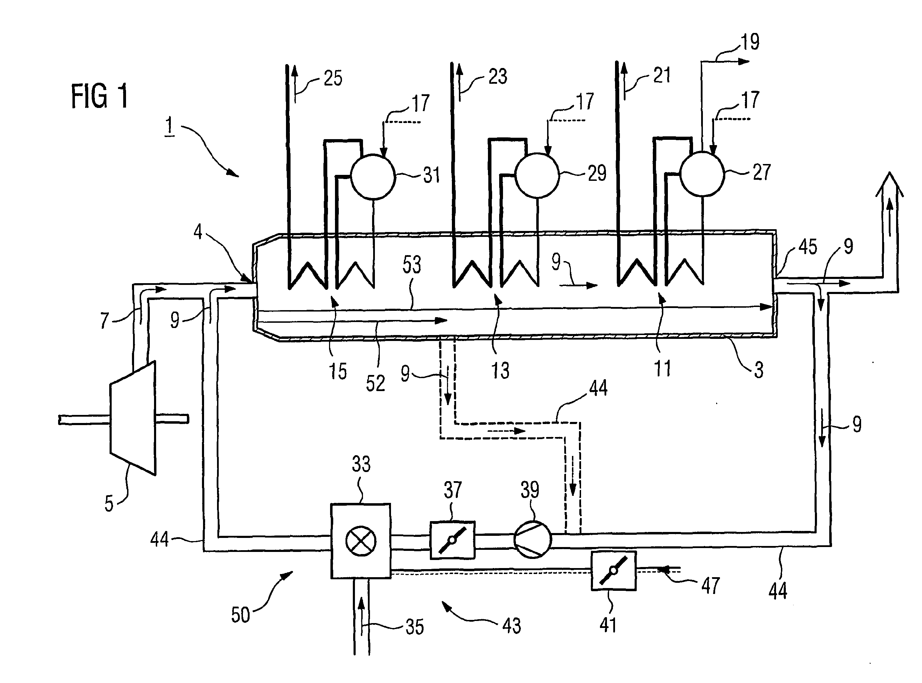

Die Erfindung geht dabei von der Überlegung aus, dass bei einer an die Rückführleitung geschalteten Befeuerungseinrichtung selbst bei zeitweiligen Störungen der Befeuerungseinrichtung der Rezirkulationskreislauf - wenn auch mit u. U. reduziertem Energieinhalt des Rauchgases- aufrecht erhalten werden kann. Des Weiteren ist bei dieser Anordnung der Volumenstrom des Rauchgases in der Rückführleitung nicht durch eine dazwischen geschaltete Komponente gestört, was einen gleichmäßigen Betrieb fördert; bei der Ausführungsform gemäß FIG 1 lässt sich der Rezirkulationskreislauf ebenfalls bei einer Störung der Befeuerungseinrichtung aufrecht erhalten, wenn nicht infolge der Störung ein ungewolltes Verschließen der Rückführleitung eintritt.

Zur Regulierung der Hilfsdampferzeugung umfasst die Befeuerungseinrichtung vorteilhaft mindestens eine Steuerungseinrichtung zur Einstellung der Temperatur und/oder Menge des Rauchgases.

Bei dieser Ausführungsform ist in jeder Betriebssituation des Kraftwerks die jeweils benötigte Menge und Energiegehalt des Hilfsdampfs gezielt erzeugbar.

Die mittels des Abhitzedampferzeugers erzeugte Menge an Hilfsdampf wird dabei dadurch bestimmt, dass die Menge an Rauchgas, welches in den Abhitzekessel eingeleitet ist, gesteuert wird, beispielsweise mittels einer Regelklappe, welche in Strömungsrichtung des Rauchgases vor und/oder nach einem Brenner der Befeuerungseinrichtung angeordnet ist.

Die Temperatur des Rauchgases des Abhitzedampferzeugers ist insbesondere durch die Menge an Brennstoff, welcher der Befeuerungseinrichtung zugeführt ist, eingestellt. Eine Erhöhung der Brennstoffzufuhr bewirkt dabei eine Erhöhung der Verbrennungstemperatur und damit eine Erhöhung der Aufheiztemperatur für das Rauchgas.

Die Menge an Verbrennungsluft, welche von der Befeuerungseinrichtung eines erfindungsgemäßen Abhitzedampferzeugers benötigt wird, ist beispielsweise mittels einer weiteren Regelklappe geregelt, welche in eine Luftzufuhrleitung der Befeuerungseinrichtung geschaltet ist.

Der benötigte Hilfsdampf kann dann dem Verdampfer entnommen werden, welcher auf dem zum Zweck der Hilfsdampferzeugung geeigneten Temperaturniveau angeordnet ist, beispielsweise demjenigen Verdampfer, welcher im Betrieb der Kraftwerksanlage den Betriebsdampf für eine Niederdruckstufe der Dampfturbine erzeugt.

Zusätzliche Ausführungsformen der Erfindung betreffen die Rolle des Hilfsdampfs als Arbeits- bzw. Erwärmungsdampf, wobei der Hilfsdampf bevorzugt in jeder Betriebssituation, insbesondere also auch während eines Anlagenstillstands, und während des An- und Abfahrens der Anlage entnehmbar ist.

Die Erfindung soll anhand einer Zeichnung näher erläutert werden. Darin zeigen:
- FIG 1: eine schematische Darstellung eines Abhitzedampferzeugers nach dem Stand der Technik mit einer in einen Zirkulationskreislauf geschalteten Befeuerungseinrichtung, und

- FIG 2: eine Ausführungsform der Erfindung mit einer an einen Zirkulationskreislauf geschalteten Befeuerungseinrichtung.

In FIG 1 ist schematisch die Anordnung eines Abhitzedampferzeugers 1 dargestellt.

Zur besseren Übersicht ist dabei der Abhitzedampferzeuger 1 in einer liegenden Position dargestellt. In einer physikalischen Ausführung kann der Abhitzedampferzeuger 1 selbstverständlich stehend angeordnet sein, also eine im Wesentlichen vertikale Erstreckung aufweisen.

Der Abhitzedampferzeuger 1 umfasst einen Abhitzekessel 3, in welchen durch eine Eintrittsöffnung 4 des Abhitzekessels 3 Abgas.7 einer Gasturbine 5 eingeleitet ist.

Im Abhitzekessel 3 sind im vorliegenden Ausführungsbeispiel Wärmetauscherflächen dreier Verdampfern angeordnet, nämlich eines Hochdruckverdampfers 15, eines Mitteldruckverdampfers 13 sowie eines Niederdruckverdampfers 11.

Die genannten Verdampfer 15, 13, 11 umfassen jeweils eine Hochdrucktrommel 31, eine Mitteldrucktrommel 29 bzw. eine Niederdrucktrommel 27.

Den Trommeln 31, 29, 27 ist dabei jeweils über eine nicht näher dargestellte Leitung Speisewasser 17 zugeführt.

Quasi parallel zum Abhitzekessel 3 ist in einer Rückführleitung 44 eine Befeuerungseinrichtung 43 angeordnet, welche einen mittels Brennstoff 35 betriebenen Brenner 33, ein Gebläse 39 sowie Regelklappen 37, 41 umfasst. Auf diese Weise ist durch eine Erhitzungsstrecke 52,53 des Abhitzekessels 3 und die Rückführleitung 44 ein Zirkulationskreislauf 50 gebildet.

Mittels des Brenners 33 wird durch Erhitzung Rauchgas 9 erzeugt, welches in den Abhitzekessel 3 eingeleitet wird. Das Rauchgas 9 durchströmt den Abhitzekessel 3 entlang der Erhitzungsstrecke 52,53 und kommt dabei mit den Heizflächen der Verdampfer 15, 13, 11 in Kontakt.

In Innenräume der Heizflächen der Verdampfer 15, 13, 11 ist mittels der jeweiligen Dampftrommel 31, 29 bzw. 27 Speisewasser 17 eingeleitet, so dass Dampf mittels Wärmetausch erzeugbar ist. So ist dem Hochdruckverdampfer 15 Hochdruckdampf 25, dem Mitteldruckverdampfer 13 Mitteldruckdampf 23, sowie dem Niederdruckverdampfer 11 Niederdruckdampf 21 entnehmbar. Dieser jeweils mittels der Verdampfer 15, 13, 11 erzeugte Dampf 25, 23 bzw. 21 kann dann in nicht näher dargestellter Weise den entsprechenden Druckstufen einer Dampfturbine zugeführt werden.

Dem Niederdruckverdampfer 11, insbesondere dessen Niederdrucktrommel 27, kann außerdem Hilfsdampf 19, beispielsweise für Hilfsdampfverbraucher des Kraftwerks oder zum Erwärmen von Anlagenkomponenten wie z.B. Frischdampfleitungen entnommen werden.

Die Entnahme von Hilfsdampf 19 ist auch in Betriebssituationen möglich, in denen kein oder nur wenig Abgas 7 der Gasturbine 5 zur Verfügung steht, beispielsweise im Stillstand oder während des An- oder Abfahrens der Gasturbine 5.
Die zur Erzeugung des Hilfsdampfs 19 benötigte Energie wird insbesondere in derartigen Betriebsfällen durch das Rauchgas 9 bereit gestellt, welches mittels der Befeuerungseinrichtung 43 erzeugt und durch den Abhitzekessel 3 geleitet ist.

Nachdem das Rauchgas 9 den Abhitzekessel 3 durch dessen Austrittsöffnung 45 verlässt, wird zumindest ein Teil davon mittels der Rückführleitung 44 zurück zur Eintrittsöffnung 4 des Abhitzekessels 3 geführt; bei einem erfindungsgemäßen Abhitzedampferzeuger ist also ein Rauchgaskreislauf gebildet. Dadurch ist insbesondere die Energieausnutzung der im Rauchgas 9 befindlichen Energie besonders gut.

Alternativ oder in Kombination kann der mindestens eine Teil des Rauchgases 9 auch an einer anderen Stelle als der Austrittsöffnung 45 dem Abhitzekessel 3 entnommen und zurück zur Befeuerungseinrichtung 43 geführt werden. Eine geeignete Stelle ist dabei beispielsweise ein Ort in Strömungsrichtung des Rauchgases 9 vor dem Mitteldruckverdampfer 13, wo das Rauchgas 9 noch nicht so stark abgekühlt ist; diese Möglichkeit zur alternativen oder zusätzlichen Rückführung des Rauchgases 9 ist in der Figur gestrichelt dargestellt.

Die Temperatur des erzeugten Hilfsdampfs 19 kann mittels einer Variation der Menge an Brennstoff 35, welcher dem Brenner 33 zugeführt ist, eingestellt werden; die Menge an Verbrennungsluft 47, welche zum Betrieb des Brenners 33 benötigt wird, wird vorteilhaft mittels einer Regelklappe 41 geregelt, welche in eine Luftversorgungsleitung zum Brenner geschaltet ist.

Ferner ist die Menge des zu erzeugenden Hilfsdampfs 19 einstellbar mittels einer weiteren Regelklappe 37, welche dem Brenner in Strömungsrichtung des Rauchgases 9 vorgeschaltet ist, um die Menge des dem Brenner zugeführten Rauchgases 9 einzustellen; das Rauchgas 9 kann mittels eines Gebläses 39 dem Brenner 33 zugeführt werden.

FIG 1 zeigt schematisch den Verfahrensablauf der Hilfsdampferzeugung eines Abhitzedampferzeugers 1 am Beispiel eines Abhitzedampferzeugers 1 für einen GUD-Drei-Druck-Prozess mit Zwischenüberhitzung. Der Verfahrensablauf ist auch für andere Prozesse (z. B. Zwei-Druck-Prozess mit Zwischenüberhitzung usw.) einsetzbar.

Bei einer Betriebsweise des Abhitzedampferzeugers 1 können in Versorgungsleitungen des Hochdruck- und Mitteldruckverdampfers geschaltete Schieber geschlossen sein, so dass in diesen Druckstufen kein Dampf erzeugt wird. Das abgekühlte Rauchgas wird an der Austrittsöffnung 45 abgegriffen und mindestens ein Teil des Rauchgases 9 zur Eintrittsöffnung 4 zurück geführt. Überschüssiges Rauchgas wird entweder über einen vorhandenen Kamin oder über einen separaten Kamin mit Saugzug abgegeben.

Durch den Brenner 33 wird das Rauchgas 9 durch Verbrennung von z. B. Erdgas auf die am Eintritt des Abhitzedampferzeugers 1 erforderliche Temperatur aufgeheizt; die erforderliche Verbrennungsluft 47 wird beispielsweise über ein Verbrennungsluftgebläse zugeführt.

Die Hilfsdampfmenge wird durch Variation der durch den Abhitzedampferzeuger strömenden Rauchgasmenge geregelt, beispielsweise mittels der Regelklappe 37.

Die Rauchgastemperatur wird durch Variation der Brennstoffmenge geregelt.

Zur Regelung der notwendigen Verbrennungsluftmenge dient beispielsweise die weitere Regelklappe 41.

Wird ein separater Kamin mit Saugzug eingesetzt, kann der rauchgasseitige Druck im System beispielsweise durch eine zusätzliche Regelklappe geregelt werden.

Bei einer alternativen Betriebsweise des Abhitzedampferzeugers 1 sind die vorher genannten Schieber geöffnet, so dass in allen Druckstufen Dampf erzeugt wird. Der Dampf aus dem Hochdruckverdampfer 15 und/oder Mitteldruckverdampfer 13 des Abhitzedampferzeugers 1 kann z. B. zum Warmhalten/Anwärmen einer Frischdampfleitung der Dampfturbine des Kraftwerks genutzt werden.

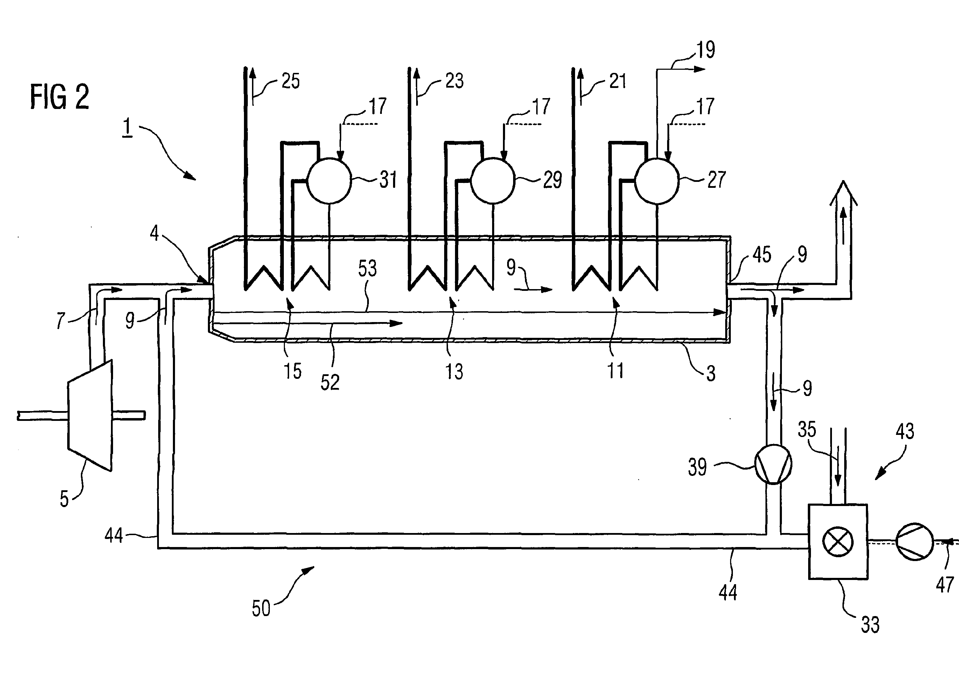

FIG 2 zeigt eine Ausführungsform eines erfindungsgemäßen Abhitzedampferzeugers 1, wobei im Unterschied zu FIG 1 die Befeuerungseinrichtung 43 nicht in, sondern an die Rückführleitung 44 geschaltet ist.

Untersuchungen haben ergeben, dass eine derartige Anordnung der Befeuerungseinrichtung 43 Vorteile bringt, da beispielsweise selbst bei zeitweiligen Störungen der Befeuerungseinrichtung 43 der Rezirkulationskreislauf - wenn auch mit u. U. reduziertem Energieinhalt des Rauchgases 9 - aufrecht erhalten werden kann. Des Weiteren ist bei dieser Anordnung der Volumenstrom des Rauchgases 9 in der Rückführleitung 44 nicht durch eine dazwischen geschaltete Komponente gestört, was einen gleichmäßigen Betrieb fördert; bei der Ausführungsform gemäß FIG 1 lässt sich der Rezirkulationskreislauf ebenfalls bei einer Störung der Befeuerungseinrichtung 43 aufrecht erhalten, wenn nicht infolge der Störung ein ungewolltes Verschließen der Rückführleitung 44 eintritt.

Das Gebläse 39 ist in die Rückführleitung 44 geschaltet und übernimmt die Funktion eines Rezirkulationsgebläses.

In die Rückführleitung 44 können weiterhin Steuereinrichtungen zur Einstellung der Menge an rezirkuliertem Rauchgas 9 geschaltet sein.

Durch einen erfindungsgemäßen Abhitzedampferzeuger ergeben sich u. a. folgende Vorteile:
- ein separater Hilfsdampferzeuger kann entfallen,
- der Abhitzedampferzeuger kann auch während eines Anlagenstillstands warm gehalten werden, so dass eventuell notwendige Frostschutzmaßnahmen entfallen können,
- der Abhitzedampferzeuger kann während eines Stillstands auf relativ hohem Druck gehalten werden, so dass bei häufigen Starts die Spannungsbelastungen dickwandiger Bauteile durch Temperaturänderungen (beim Aufheizen und Abkühlen) deutlich reduziert werden können,
- die Frischdampfleitung der Dampfturbine sowie die Dampfturbine selbst können warm gehalten und/oder angewärmt werden, so dass deutliche Verkürzungen der Anfahrzeiten der Gesamtanlage möglich sind, was u. a. zu einer erheblichen Reduktion der Abgasemissionen führt, und
- selbst bei zeitweiligen Störungen der Befeuerungseinrichtung kann der Rezirkulationskreislauf aufrecht erhalten werden.

## Patentansprüche

1. Abhitzedampferzeuger (1) eines Gas- und Dampfkraftwerks, welcher einen Abhitzekessel (3) umfasst, dem Abgas (7) einer Gasturbine (5) zuführbar ist und welcher weiterhin eine Mehrzahl von im Abhitzekessel (3) angeordneten, jeweils unterschiedlichen Druckstufen Zugeordneten Verdampfer (11, 13, 15) zur Erzeugung von Betriebsdampf für eine Dampfturbine umfasst, wobei dem Abhitzekessel (3) Rauchgas (9) aus einer Befeuerungseinrichtung (43) zuführbar ist, zur Rückführung des Rauchgases (9) eine Rückführleitung (44) vorgesehen ist, welche mit einer Erhitzungsstrecke (52, 53) des Abhitzekessels (3) einen Zirkulationskreislauf (50) bildet und zumindest ein Teil des Rauchgases (9) an mindestens einer Stelle des Abhitzekessels (3) entnehmbar und zu einer Eintrittsöffnung (4) des Abhitzekessels (3) rückführbar ist, wobei der mindestens eine Teil des Rauchgases (9) dem Abhitzekessel (3) an oder in Strömungsrichtung des Rauchgases (9) nach dessen Austrittsöffnung (45) entnehmbar ist,
**dadurch gekennzeichnet, dass**
die Befeuerungseinrichtung (43) an den Zirkulationskreislauf (50) geschaltet ist.

2. Abhitzedampferzeuger (1) nach Anspruch 1,
**dadurch gekennzeichnet, dass**
die Befeuerungseinrichtung (43) mindestens eine Steuerungseinrichtung (37, 39, 41) zur Einstellung der Temperatur und/oder Menge des Rauchgases (9) umfasst.

3. Abhitzedampferzeuger (1) nach Anspruch 1 oder 2,
**dadurch gekennzeichnet, dass**
mindestens einem Verdampfer (11, 13, 15) Hilfsdampf (19)
zum Betrieb mindestens eines Dampfverbrauchers des Gas-und Dampfkraftwerks entnehmbar ist.

4. Abhitzedampferzeuger (1) nach einem der Ansprüche 1 bis 3,
**dadurch gekennzeichnet, dass**
mindestens einem Verdampfer (11, 13, 15) Hilfsdampf (19) zum Anwärmen und/oder Warmhalten und/oder Druckhalten des Abhitzekessels (3) und/oder von Frischdampfleitungen und/oder der Dampfturbine des Gas- und Dampfkraftwerks entnehmbar ist.

## Claims

1. Waste heat steam generator (1) for a gas and steam power station, which has a waste heat boiler (3) to which exhaust gas (7) from a gas turbine (5) can be supplied, and which also has a plurality of evaporators (11, 13, 15) each associated with different pressure stages, which are arranged in the waste heat boiler (3), in order to generate operating steam for a steam turbine, with the waste heat boiler (3) being supplied with flue gas (9) from a heating device (43), a feedback line (44) being provided in order to feed back the flue gas (9), forming a circulation circuit (50) with a heating path (52, 53) through the waste heat boiler (3), and wherein at least a portion of the flue gas (9) can be extracted at at least one point from the waste heat boiler (3), and can be fed back to an inlet opening (4) into the waste heat boiler (3), with at least one portion of the flue gas (9) being extracted from the waste heat boiler (3) at or in the flow direction of the flue gas (9) downstream from its outlet opening (45),
**characterized in that**
the heating device (43) is connected to a circulation circuit (50).

2. Waste heat steam generator (1) according to Claim 1,
**characterized in that**
the heating device (43) has at least one control device (37, 39, 41) for adjustment of the temperature and/or the flow rate of the flue gas (9).

3. Waste heat steam generator (1) according to Claim 1 or 2,
**characterized in that**
auxiliary steam (19) can be extracted from at least one evaporator (11, 13, 15), for operation of at least one steam consumer from the gas and steam power station.

4. Waste heat steam generator (1) according to one of Claims 1 to 3,
**characterized in that**
auxiliary steam (19) can be extracted from at least one evaporator (11, 13, 15) in order to heat up and/or keep hot and/or to maintain the pressure in the waste heat boiler (3), and/or can be extracted from fresh steam lines and/or from the steam turbine in the gas and steam power station.

## Revendications

1. Générateur ( 1 ) de vapeur, à récupération de la chaleur perdue, d'une centrale électrique à gaz et à vapeur, qui comprend une chaudière ( 3 ) de récupération de la chaleur perdue, à laquelle peut être envoyé le gaz ( 7 ) d'échappement d'une turbine ( 5 ) à gaz et qui comprend en outre, pour produire de la vapeur de fonctionnement pour une turbine à vapeur, une multiplicité d'évaporateurs ( 11, 13, 15 ) disposés dans la chaudière ( 3 ) de récupération de la chaleur perdue et associés respectivement à des étages de pression différents, du gaz ( 9 ) de fumée, provenant d'un dispositif ( 43 ) à foyer, pouvant être envoyé à la chaudière ( 3 ) à récupération de la chaleur perdue et un conduit ( 44 ) de retour étant prévu pour retourner le gaz ( 9 ) de fumée, conduit qui forme, avec une section ( 52, 53 ) de chauffage de la chaudière ( 3 ) à récupération de la chaleur perdue, un circuit ( 50 ) de circulation et au moins une partie du gaz ( 9 ) de fumée pouvant être prélevé en au moins un point de la chaudière ( 3 ) à récupération de la chaleur perdue et être retournée à une ouverture ( 4 ) d'entrée de la chaudière ( 3 ) à récupération de la chaleur perdue, la au moins une partie du gaz ( 9 ) de fumée pouvant être prélevée de la chaudière ( 3 ) à récupération de la chaleur perdue, sur ou dans le sens du courant de gaz ( 9 ) perdu, après son ouverture ( 45 ) de sortie,
**caractérisé en ce que**
le dispositif ( 43 ) à foyer est monté sur le circuit ( 50 ) de circulation.

2. Générateur ( 1 ) de vapeur à récupération de la chaleur perdue suivant la revendication 1,
**caractérisé en ce que**
le dispositif ( 43 ) à foyer comprend au moins un dispositif ( 37, 39, 41 ) de commande pour régler la température et/ou la quantité du gaz ( 9 ) de fumée.

3. Générateur ( 1 ) de vapeur à récupération de la chaleur perdue suivant la revendication 1 ou 2,
**caractérisé en ce que**
de la vapeur ( 19 ) auxiliaire, pour faire fonctionner au moins un appareil consommateur de vapeur de la centrale électrique à gaz et à vapeur, peut être prélevé d'au moins un évaporateur ( 11, 13, 15 ).

4. Générateur ( 1 ) de vapeur à récupération de la chaleur perdue selon l'une des revendications 1 à 3,
**caractérisé en ce que**
la vapeur ( 19 ) auxiliaire pour réchauffer et/ou pour maintenir chaude la chaudière ( 3 ) à récupération de la chaleur perdue et/ou pour en maintenir la pression, peut être prélevée d'au moins un évaporateur ( 11, 13, 15 ) et/ou de lignes de vapeur fraîche et/ou de la turbine à vapeur de la centrale électrique à gaz et à vapeur.
